# FASCICULE DE BREVET EUROPEEN

(11) **EP 4 107 132 B1**
(45) Date de publication et mention de la délivrance du brevet: **10.04.2024**
(21) Numéro de dépôt: 21708284.1
(22) Date de dépôt: 12.02.2021
(51) Int. Cl.: C03C 17/00, C03C 17/34, C03C 17/42, C03C 17/38, G02B 5/08

(54) **PROCÉDÉ DE FABRICATION D'UN VERRE DÉCORATIF À FONCTION ANTI-ÉCLATS**
VERFAHREN ZUM HERSTELLEN VON DEKORATIONSGLAS MIT EINER SPLITTERSCHUTZFUNKTION
METHOD FOR MANUFACTURING DECORATIVE GLASS HAVING A SHATTERPROOF FUNCTION

(30) Priorité: 20.02.2020 FR 2001688
(43) Date de publication de la demande: 28.12.2022
(73) Titulaire: Saint-Gobain Glass France, 92400 Courbevoie (FR)
(72) Inventeur: GUILLEMOT, Laure-Hélène, 60200 COMPIEGNE (FR)
(74) Mandataire: Saint-Gobain Recherche
(86) Numéro de dépôt international: PCT/FR2021/050256
(87) Numéro de publication internationale: WO 2021/165603

(56) Documents cités:
- WO-A1-2019/122714
- WO-A1-2019/207241
- FR-A1- 2 936 240

## Description

L'invention se rapporte au domaine des verres décoratifs revêtus d'une couche de peinture, notamment des verres laqués et des miroirs.

Les miroirs sont notamment des miroirs spéculaires, dans lesquels un utilisateur peut se mirer. De tels miroirs sont par exemple disposés à l'intérieur d'habitations, par exemple dans des salles de bain, ou sont utilisés comme éléments de pièces d'ameublement (portes de placard...) ou de décoration. Ces miroirs comprennent généralement un substrat de verre revêtu en face 2 (la face opposée à celle tournée vers l'utilisateur) d'une couche réfléchissante en argent, laquelle est revêtue d'une couche de peinture. La peinture a une fonction optique, celle d'empêcher toute visibilité au travers du miroir en bloquant le passage des rayons lumineux transmis à travers la couche d'argent. La peinture a également pour fonction de protéger la couche d'argent contre la corrosion.

Les verres laqués possèdent également une couche de peinture, cette fois-ci à fonction esthétique, et disposée sur la face 2 de manière à être visible au travers du substrat de verre.

Dans certaines applications, les miroirs et verres laqués sont collés sur toute leur face sur un support, si bien qu'en cas de casse du verre, les éclats de verre restent collés sur le support et présentent peu de danger pour les utilisateurs. Dans d'autres applications en revanche, par exemple pour des portes de placard ou de la décoration murale, le miroir ou le verre laqué n'est pas collé sur un support, mais peut être fixé audit support à l'aide de divers moyens de fixation, tels que des pattes, des crochets, des rails... et il existe un risque d'émission d'éclats tranchants potentiellement dangereux. Ce risque existe même en cas de collage des miroirs ou des verres laqués, lorsque la colle n'est pas appliquée sur toute la surface, mais à l'aide de cordons de colle disjoints ou lorsqu'il est fait usage de bandes d'adhésif double-face.

Pour ce faire, il est connu de protéger les miroirs et verres laqués par des films de sécurité, par exemple des feuilles polymériques collées, généralement au-dessus de la couche de peinture afin qu'ils ne soient pas visibles. Le dépôt de film est toutefois coûteux car il nécessite l'emploi de machines spécifiques. Le dépôt de film peut être réalisé soit sur des miroirs et verres laqués de grande taille, sur le site où est réalisée l'argenture, soit ultérieurement, sur des miroirs et verres laqués possédant leurs dimensions définitives, sur le site de transformation où sont réalisées les étapes de découpe, de façonnage, éventuellement de perçage etc... Dans le premier cas (miroirs et verres laqués de grande taille), plusieurs films doivent être employés, qui doivent se recouvrir partiellement, rendant la découpe ultérieure plus difficile dans la zone de recouvrement. Dans le deuxième cas, les dimensions du film doivent être adaptées aux dimensions du miroir ou verre laqué final, ce qui génère des pertes coûteuses en matériau servant à réaliser le film.

Des couches de rétention des éclats ont également été développées. Déposées sur la couche de peinture par les mêmes techniques de dépôt que cette dernière, par exemple au rideau, au pistolet, au pinceau etc... et donc potentiellement à l'aide des mêmes outils de production, ces couches sont à base de résines. De telles couches sont par exemple décrites dans la demande JP 2000-126012.

Il est ainsi possible de déposer des couches à base de résine sur des verres décoratifs existants, dont la couche de peinture a été préalablement séchée et cuite. Un tel procédé n'est toutefois pas rentable à l'échelle industrielle. Les inventeurs ont toutefois pu mettre en évidence que l'incorporation de l'étape de dépôt de la couche de résine à la production des verres décoratifs pouvait toutefois conduire à des défauts au niveau de la couche de peinture ou de la couche de résine, notamment du type craquelures et cloques, voire à la suppression de la fonction de rétention des éclats. Les interactions possibles entre les deux couches, selon notamment l'état de la couche de peinture au moment du dépôt de la couche de résine, ainsi que les cinétiques de séchage des deux couches, peuvent générer ces défauts.

Le document FR 2 936 240 A1 divulgue un procédé d'obtention de verres décoratifs.

L'invention a pour but de proposer un procédé permettant d'obtenir à l'échelle industrielle et de manière économique des verres décoratifs, par exemple du type miroirs ou verres laqués, sans défauts et qui présentent une fonction de rétention des éclats.

A cet effet l'invention a pour objet un procédé d'obtention d'un verre décoratif comprenant une feuille de verre revêtue d'une couche de peinture et d'une couche de résine, dans lequel la feuille de verre passe successivement dans une première installation d'enduction au rideau dans laquelle la couche de peinture est déposée sur la feuille de verre, puis dans une première installation de traitement thermique dans laquelle la feuille de verre revêtue de la couche de peinture est soumise à un premier traitement thermique, puis dans une deuxième installation d'enduction au rideau, dans laquelle la couche de résine est déposée sur la couche de peinture, puis dans une deuxième installation de traitement thermique, dans laquelle la feuille de verre, revêtue de la couche de peinture et de la couche de résine, est soumise à un deuxième traitement thermique, le premier traitement thermique étant tel que la température de la surface de la feuille de verre immédiatement avant le dépôt de la couche de résine est comprise dans un domaine allant de 50 à 120°C.

De manière connue, l'enduction au rideau est une technique de dépôt dans laquelle on forme un rideau d'une composition liquide, ici la composition de peinture liquide ou de résine liquide, le rideau tombant sur un substrat en défilement, ici la feuille de verre.

La feuille de verre est de préférence une feuille plane, généralement de forme rectangulaire. De préférence, la feuille de verre présente une dimension d'au moins 2 m, notamment d'au moins 3 m. L'enduction au rideau permet en effet de déposer rapidement des couches homogènes sur des feuilles de très grande taille, par exemple de 6*3 m² (correspondant aux feuilles de verre sortant d'usine de production par flottage), ce qui fait de l'enduction au rideau une technique particulièrement économique. L'épaisseur de la feuille de verre est de préférence comprise dans un domaine allant de 1 à 19 mm, notamment de 2 à 12 mm et même de 3 à 9 mm.

Le verre est de préférence un verre silico-sodo-calcique, mais d'autres types de verres comme les borosilicates ou les aluminosilicates peuvent être employés. Le verre est de préférence obtenu par flottage. Le verre est de préférence incolore, mais peut être teinté, par exemple en bleu, vert, bronze etc...

Par l'expression « revêtu », on entend que la couche qui revêt le substrat ou une autre couche est déposée au-dessus du substrat ou de cette autre couche, mais pas nécessairement en contact avec eux.

On entend par couche de peinture une couche comprenant au moins une résine et au moins une charge minérale, dont au moins un pigment. La couche de peinture est obtenue par dépôt d'une composition de peinture liquide comprenant généralement un solvant en plus de la résine et des charges minérales, puis séchage de la couche obtenue. Le séchage implique l'évaporation d'une grande partie du solvant. Dans certains cas, lorsque la peinture doit être réticulée, la couche de peinture doit en outre être cuite. On distingue alors le séchage, dans lequel le solvant s'évapore, la résine n'ayant pas commencé à réticuler, et la cuisson, dans laquelle la résine réticule.

La couche de peinture comprend de préférence 20 à 80%, notamment 20 à 50% en poids de résines et 20 à 80%, notamment 30 à 80% en poids de charges minérales.

La peinture liquide est de préférence à base aqueuse ou sans solvant. Par « base aqueuse » on entend que la peinture liquide comprend moins de 10%, notamment moins de 5% en poids de solvant organique, voire ne comprend pas de solvants organiques.

Le pourcentage pondéral d'extrait sec de la peinture liquide est de préférence d'au moins 50%, voire d'au moins 60%, notamment de 60 à 70% dans le cas de peintures liquides à base aqueuse. Il peut être de 100% dans le cas de peinture liquide sans solvant.

Au moins une résine de la couche de peinture est de préférence choisie parmi les résines acryliques, les résines polyuréthanes, les résines époxydes et les résines alkydes.

La peinture liquide est de préférence à base d'une dispersion aqueuse d'une résine époxyde réticulée avec de la mélamine. Dans le cas de miroirs, une telle peinture s'est révélée efficace pour protéger contre la corrosion la couche d'argent sous-jacente.

Au moins une charge minérale de la couche de peinture est avantageusement choisie parmi l'oxyde de zinc, le sulfate de baryum, les phosphates de zinc, notamment l'orthophosphate de zinc, le talc, le carbonate de calcium, le mica, l'oxyde de titane, le noir de carbone et leurs mélanges. Les charges minérales permettent d'améliorer la résistance à la corrosion de la couche d'argent (dans le cas des miroirs) et/ou d'obtenir l'opacité ou la teinte désirée.

Dans le cas de miroirs, pour lesquels la couche de peinture n'est pas visible dans l'application finale, le pigment est de préférence du noir de carbone, qui permet d'obtenir une bonne opacité pour de faibles épaisseurs. Dans le cas des verres laqués, les pigments sont choisis pour conférer la teinte désirée.

La couche de peinture ne contient de préférence pas de plomb.

La couche de peinture peut en outre comprendre divers additifs, tels que des agents antimousse, des biocides ou des tensioactifs.

La couche de peinture possède une épaisseur de préférence comprise dans un domaine allant de 20 à 100 µm, notamment de 30 à 80 µm, voire de 40 à 70 µm. Des épaisseurs élevées peuvent s'avérer nécessaire dans le cas où des propriétés de protection contre la corrosion sont requises. Il s'agit ici de l'épaisseur de la couche dans le produit final.

La première installation de traitement thermique est notamment un four ou une étuve, en particulier du type tunnel, c'est-à-dire sous la forme d'une enceinte traversée par la feuille de verre en mouvement, généralement sur un convoyeur. Le verre peut notamment être chauffé par rayonnement (par exemple à l'aide de lampes infrarouge) et/ou par convection (par exemple par soufflage d'air chaud).

Le premier traitement thermique permet de chauffer la feuille de verre de sorte que la température de la surface de la feuille de verre immédiatement avant le dépôt de la couche de résine soit comprise dans un domaine allant de 50 à 120°C. On peut donc régler la température dans la première installation de traitement thermique, voire les températures dans le cas préféré où la première installation possède plusieurs zones de chauffe, et éventuellement la distance entre cette installation et la deuxième installation d'enduction au rideau, de manière à atteindre la température désirée.

Cette température peut notamment être mesurée à l'aide d'un pyromètre, juste avant le deuxième rideau. Des mesures à l'aide de caméras infrarouge permettent également d'évaluer l'homogénéité de la température de la surface. La surface de verre concernée est celle qui va être revêtue par la couche de résine (et qui est donc revêtue de la couche de de peinture).

Il a été observé qu'une surface du verre trop froide pouvait générer, lors (ou à l'issue) du deuxième traitement thermique, la formation de cloques dans la couche de résine. Il semblerait que ces cloques soient provoquées par une évaporation trop rapide du solvant de la composition de résine liquide. Inversement, une surface de verre trop chaude favorise la formation de craquelures dans la couche de résine.

La température de la surface de la feuille de verre immédiatement avant le dépôt de la couche de résine est de préférence d'au moins 60°C, notamment d'au moins 70°C, voire d'au moins 80°C. Elle est avantageusement d'au plus 110°C, voire d'au plus 100°C. Il a été observé que la température optimale dépendait de l'épaisseur de la couche de résine. Pour une épaisseur plus grande, la température minimale pour éviter l'apparition de cloques est plus élevée, tandis que la température maximale pour éviter l'apparition de craquelures est plus faible.

Il a en outre pu être observé que si la couche de peinture n'est pas suffisamment séchée lorsque la couche de résine est déposée, les propriétés de rétention des éclats pouvaient être diminuées, voire annihilées et/ou la résistance à la corrosion de bord peut être dégradée. Il semblerait que cela pourrait être dû à une trop forte adhésion entre les deux couches. Pour des couches de peinture présentant une plus forte tension de surface, une augmentation de la température subie lors du premier traitement thermique par le verre revêtu de la couche de peinture, et donc un meilleur séchage voire un début de cuisson, peut s'avérer bénéfique afin d'obtenir de bonnes propriétés de rétention des éclats. En revanche, pour des couches de peinture présentant une faible tension de surface, une température plus faible peut être choisie
De préférence, le premier traitement thermique provoque donc en outre au moins un séchage de la peinture, c'est-à-dire est à même d'évaporer la majeure partie du solvant. Le séchage peut être vérifié de manière simple en posant le doigt sur la couche et en évaluant si de la peinture est transférée sur le doigt ou non.

Le premier traitement thermique peut en outre provoquer au moins un début de réticulation de la couche de peinture, c'est-à-dire un début de réticulation de la résine de la peinture. On peut parler alors de « pré-cuisson ». Le début de la réticulation peut s'observer notamment par spectroscopie infra-rouge.

Afin de provoquer ce séchage, voire cette pré-cuisson, la température subie par le verre lors du premier traitement thermique est de préférence d'au moins 80°C, voire d'au moins 90°C, et même d'au moins 100°C ou d'au moins 110°C. La durée pendant laquelle cette température est atteinte ou dépassée est de préférence d'au moins 20 secondes, voire d'au moins 30 secondes et même d'au moins 1 minute. Cette température peut notamment être mesurée à l'aide d'un pyromètre ou de thermocouples.

Dans les deux cas cités (séchage ; séchage + pré-cuisson), la cuisson finale de la couche de peinture (c'est-à-dire l'achèvement de la réticulation) est alors réalisée lors du deuxième traitement thermique, simultanément avec le séchage de la couche de résine.

Selon un autre mode de réalisation, le premier traitement thermique provoque la cuisson complète de la couche de peinture, le deuxième traitement thermique ne servant alors qu'à sécher la couche de résine.

La couche de résine possède de préférence des propriétés de rétention des éclats.

La couche de résine est dans ce cas de préférence obtenue par dépôt d'une dispersion aqueuse de polyuréthane. Le pourcentage pondéral d'extrait sec est de préférence compris entre 20 et 50%. Une telle couche de résine ne nécessitant pas de réticulation, un simple séchage est nécessaire. Les avantages d'un tel choix de résine sont multiples. D'une part ces résines résistent à des températures élevées, ce qui est utile lorsque la cuisson de la couche de peinture doit être réalisée ou achevée dans la deuxième installation de traitement thermique. D'autre part ces résines présentent une élongation à la rupture importante, qui leur procure des propriétés de rétention des éclats.

La couche de résine est de préférence constituée de résine.

La couche de résine est déposée de préférence directement sur la couche de peinture (c'est-à-dire en contact direct avec elle).

L'épaisseur de la couche de résine est de préférence comprise entre 20 et 60 µm, notamment entre 25 et 40 µm. Des épaisseurs trop faibles ne permettent pas d'obtenir les propriétés désirées en termes de rétention des éclats. Il s'agit ici de l'épaisseur de la couche dans le produit final.

La deuxième installation de traitement thermique est notamment un four ou une étuve, en particulier du type tunnel, c'est-à-dire sous la forme d'une enceinte susceptible d'être traversée par la feuille de verre en mouvement. Le verre peut notamment être chauffé par rayonnement (par exemple à l'aide de lampes infrarouge) et/ou par convection (par exemple par soufflage d'air chaud).

Le deuxième traitement thermique provoque au moins le séchage de la couche de résine. Comme indiqué précédemment, il peut aussi assurer ou achever la cuisson de la couche de peinture. Selon les cas, les températures subies par le verre seront donc à ajuster différemment. Dans le cas où la cuisson de la couche de peinture doit être réalisée, ou au moins achevée, dans la deuxième installation de traitement thermique, donc lors du deuxième traitement thermique, la température subie par le verre doit être d'au moins 170°C, voire d'au moins 180°C. On notera toutefois qu'une température de cuisson trop élevée peut être préjudiciable aux propriétés de rétention des éclats. L'augmentation de température, si elle est trop rapide, peut en outre générer l'apparition de cloques dans la couche de résine.

De préférence, les installations d'enduction au rideau et les installations de traitement thermique sont disposées l'une après l'autre (sur une même ligne de fabrication), la feuille de verre étant convoyée successivement dans chacune de ces installations. Le cas échéant, la ligne de fabrication comprend en amont une ligne de dépôt par argenture.

Le verre décoratif peut être un verre laqué. Dans ce cas, la couche de peinture est de préférence déposée directement sur la feuille de verre. Par « directement » on entend qu'il existe un contact direct.

Le verre décoratif est de préférence un miroir. La feuille de verre est alors revêtue d'une couche réfléchissante en argent disposée sous la couche de peinture. Le procédé selon l'invention comprend alors, avant le dépôt de la couche de peinture, une étape de dépôt de ladite couche réfléchissante.

Le dépôt de la couche d'argent est de préférence réalisé par argenture. D'autres procédés sont possibles, comme par exemple la pulvérisation cathodique assistée par champ magnétique, fréquemment appelée « procédé magnétron ».

L'épaisseur physique de la couche d'argent est de préférence comprise dans un domaine allant de 50 à 200 nm.

La couche d'argent est de préférence déposée directement sur la feuille de verre, à l'exception des couches résultant des traitements de surface classiquement utilisés dans le procédé d'argenture, lorsque la couche d'argent est déposée par ce procédé. Dans ce dernier cas, il est avantageux de traiter la surface de la feuille de verre par une solution contenant des chlorures d'étain et de palladium avant le dépôt de la couche d'argent. De même, avant le dépôt de la couche de peinture, la surface de la couche d'argent est de préférence traitée à l'aide d'une solution contenant du chlorure d'étain et à l'aide d'aminosilanes. Ces traitements peuvent former des couches extrêmement minces détectables uniquement par des techniques analytiques poussées.

La couche d'argent est de préférence substantiellement en contact avec le substrat de verre, et/ou la couche de peinture est substantiellement en contact avec la couche d'argent, au sens où seuls les traitements de surface susmentionnés ont pu être pratiqués.

Le miroir obtenu présente une bonne résistance à la corrosion. Typiquement, la corrosion de bord est d'au plus 1,5 mm, voire 1,2 mm et même 1,0 mm après un test CASS de 120 heures selon la norme ISO 9227 :2012. Le test CASS est un test de résistance au brouillard salin cupro-acétique.

L'invention est illustrée par les figures et exemples non limitatifs qui suivent, dans lesquels :
[Fig 1] est une représentation schématique en coupe d'un verre décoratif selon un premier mode de réalisation.
[Fig 2] est une représentation schématique en coupe d'un verre décoratif selon un deuxième mode de réalisation.
[Fig 3] est une représentation schématique d'une ligne servant à mettre en œuvre le procédé selon l'invention.

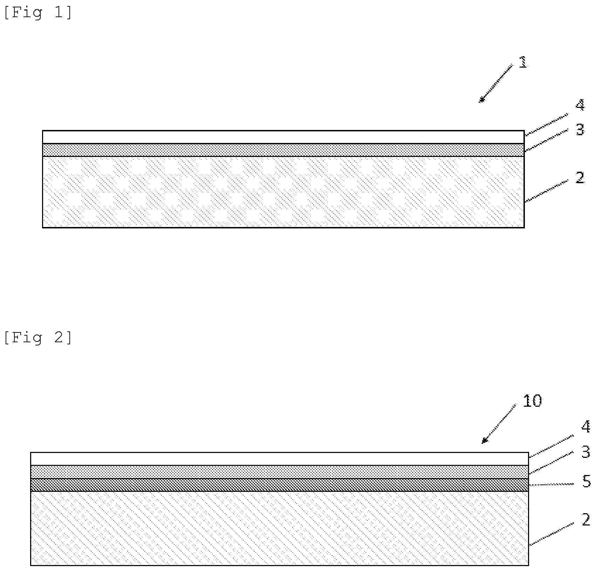

Le verre décoratif 1 de la figure 1 est constitué d'une feuille de verre 2 sur laquelle est déposée une couche de peinture 3 et une couche de résine 4.

Le verre décoratif 10 de la figure 2 est un miroir, qui se distingue du verre décoratif 1 en ce qu'une couche d'argenture 5 a été déposée sur la feuille de verre 2 préalablement au dépôt de la couche de peinture 4.

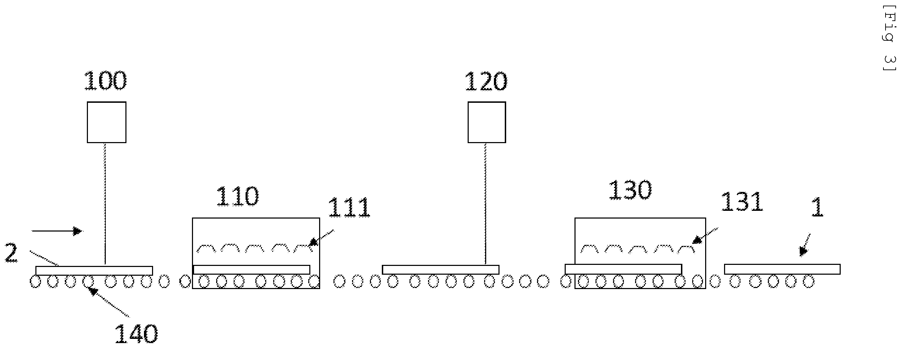

Les différents exemples ont été réalisés sur une ligne schématisée en figure 3, comprenant successivement une première installation d'enduction au rideau 100, une première installation de traitement thermique 110 par chauffage au moyen de lampes infrarouge 111, une deuxième installation d'enduction au rideau 120 et enfin une deuxième installation de traitement thermique 130, également au moyen de lampes infrarouge 131.

Une feuille de verre clair 2, d'une épaisseur de 3 ou 4 mm selon les exemples, a été déplacée sur des convoyeurs 140 de manière à passer successivement dans ces différentes installations 100, 110, 120 et 130.

Les peintures employées, notées P1 et P2, étaient des peintures pour miroir à base aqueuse comprenant une résine d'un copolymère acrylique/époxy réticulé avec de la mélamine. Dans tous les cas la couche de peinture avait une épaisseur de 40 µm après cuisson. La peinture P1 possédait une tension de surface de 23 mN/m (aussi bien séchée que cuite) et la peinture P2 une tension de surface de 48 mN/m après séchage et de 38 mN/m après cuisson.

La couche de résine était une couche obtenue par dépôt d'une dispersion aqueuse de polyuréthane.

Dans une première série d'exemples, on a étudié l'influence de la température de la feuille de verre, revêtue de la couche de peinture P1, immédiatement avant le dépôt de la couche de résine, sur l'apparition de cloques. Cette température, appelée T1, était mesurée à l'aide d'un pyromètre. L'épaisseur de la couche de résine était de 28 µm à l'état sec. La température atteinte par le verre dans la deuxième installation de traitement thermique était de 180°C.

Afin de faire varier la température T1, on a fait varier la température de la première installation de traitement thermique entre 140 et 170°C.

Dans un exemple comparatif, la feuille de verre avait une épaisseur de 3 mm et la température T1 était de 45°C. On a pu observer dans le produit final la présence de cloques dans la couche de résine.

Dans des exemples selon l'invention, la feuille de verre avait une épaisseur de 4 mm et la température T1 était, selon les exemples, de 85°C, 89°C et 95°C. Dans tous les cas, aucune présence de cloques n'a été observée.

Dans une deuxième série d'exemples, on a étudié l'influence de la température T2 subie, lors du premier traitement thermique, par la feuille de verre revêtue de la couche de peinture, sur les propriétés de rétention des éclats. La température T2 a été mesurée à l'aide de thermocouples. Dans cette série d'exemples, la couche de résine avait une épaisseur de 50 µm à l'état sec.

Dans le cas de la peinture P1, un séchage à une température T2 de 80°C ou de 110°C, suivi d'une cuisson à 180°C (dans la deuxième installation de traitement thermique) a été suffisant pour obtenir de bonnes propriétés de rétention des éclats. De bonnes performance ont aussi été obtenues par une cuisson à 180°C dans la première installation suivie d'un séchage à 110°C dans la deuxième installation.

Dans le cas en revanche de la peinture P2, qui présente une plus forte tension de surface, un séchage à une température T2 de 80°C s'est révélé insuffisant. Une température T2 de 110°C ou de 180°C a en revanche donné de bons résultats.

## Revendications

1. Procédé d'obtention d'un verre décoratif (1, 10) comprenant une feuille de verre (2) revêtue d'une couche de peinture (3) et d'une couche de résine (4), dans lequel la feuille de verre (2) passe successivement dans une première installation d'enduction au rideau (100) dans laquelle la couche de peinture (3) est déposée sur la feuille de verre (2), puis dans une première installation de traitement thermique (110) dans laquelle la feuille de verre (2) revêtue de la couche de peinture (3) est soumise à un premier traitement thermique, puis dans une deuxième installation d'enduction au rideau (120), dans laquelle la couche de résine (4) est déposée sur la couche de peinture (3), puis dans une deuxième installation de traitement thermique (130), dans laquelle la feuille de verre (2), revêtue de la couche de peinture (3) et de la couche de résine (4), est soumise à un deuxième traitement thermique, le premier traitement thermique étant tel que la température de la surface de la feuille de verre (2) immédiatement avant le dépôt de la couche de résine (4) est comprise dans un domaine allant de 50 à 120°C.

2. Procédé selon la revendication 1, dans lequel le verre décoratif (10) est un miroir, la feuille de verre (2) étant revêtue d'une couche réfléchissante en argent (5) disposée sous la couche de peinture (3), le procédé comprenant avant le dépôt de la couche de peinture (3), une étape de dépôt, notamment par argenture, de ladite couche réfléchissante (5).

3. Procédé selon l'une des revendications précédentes, dans lequel la couche de peinture (3) comprend au moins une résine et au moins une charge minérale, dont au moins un pigment, au moins une résine de la couche de peinture étant choisie parmi les résines acryliques, les résines polyuréthanes, les résines époxydes et les résines alkydes.

4. Procédé selon l'une des revendications précédentes, tel que la couche de peinture (3) est obtenue par dépôt d'une composition de peinture liquide à base aqueuse ou sans solvant.

5. Procédé selon la revendication précédente, dans lequel la peinture liquide est à base d'une dispersion aqueuse d'une résine époxyde réticulée avec de la mélamine.

6. Procédé selon l'une des revendications précédentes, tel que la couche de peinture (3) possède une épaisseur comprise dans un domaine allant de 20 à 100 µm, notamment de 30 à 80 µm.

7. Procédé selon l'une des revendications précédentes, tel que la température de la surface de la feuille de verre (2) immédiatement avant le dépôt de la couche de résine (4) est d'au moins 60°C.

8. Procédé selon la revendication précédente, dans lequel la température de la surface de la feuille de verre (2) immédiatement avant le dépôt de la couche de résine (4) est d'au moins 70°C, notamment d'au moins 80°C, et d'au plus 110°C.

9. Procédé selon l'une des revendications précédentes, dans lequel le premier traitement thermique provoque au moins un séchage de la peinture (3).

10. Procédé selon la revendication précédente, dans lequel le premier traitement thermique provoque en outre au moins un début de réticulation de la couche de peinture (3).

11. Procédé selon l'une des revendications 9 ou 10, dans lequel la température subie par le verre lors du premier traitement thermique est d'au moins 100°C, et la durée pendant laquelle cette température est atteinte ou dépassée est d'au moins 30 secondes, notamment d'au moins 1 minute.

12. Procédé selon l'une des revendications précédentes, dans lequel la couche de résine (4) est constituée de résine.

13. Procédé selon l'une des revendications précédentes, dans lequel la couche de résine (4) est obtenue par dépôt d'une dispersion aqueuse de polyuréthane.

14. Procédé selon l'une des revendications précédentes, tel que l'épaisseur de la couche de résine (4) est comprise entre 20 et 60 µm, notamment entre 25 et 40 µm.

15. Procédé selon l'une des revendications précédentes, dans lequel la température subie par le verre lors du deuxième traitement thermique est d'au moins 180°C.

## Patentansprüche

1. Verfahren zum Erhalten eines dekorativen Glases (1, 10), umfassend eine Glasscheibe (2), die mit einer Lackschicht (3) und einer Harzschicht (4) beschichtet ist, wobei die Glasscheibe (2) nacheinander eine erste Vorhangbeschichtungsanlage (100), in der die Lackschicht (3) auf die Glasscheibe (2) aufgebracht wird, dann eine erste Wärmebehandlungsanlage (110), in der die mit der Lackschicht (3) beschichtete Glasscheibe (2) einer ersten Wärmebehandlung unterzogen wird, und dann eine zweite Vorhangbeschichtungsanlage (120), in der die Harzschicht (4) auf die Lackschicht (3) aufgebracht wird, dann eine zweite Wärmebehandlungsanlage (130), in der die Glasscheibe (2), die mit der Lackschicht (3) und der Harzschicht (4) beschichtet ist, einer zweiten Wärmebehandlung unterzogen wird, durchläuft, wobei die erste Wärmebehandlung derart erfolgt, dass die Temperatur der Oberfläche der Glasscheibe (2) unmittelbar vor dem Aufbringen der Harzschicht (4) in einem Bereich von 50 bis 120 °C liegt.

2. Verfahren nach Anspruch 1, wobei das dekorative Glas (10) ein Spiegel ist, wobei die Glasscheibe (2) mit einer reflektierenden Silberschicht (5) beschichtet ist, die unter der Lackschicht (3) angeordnet ist, das Verfahren umfassend vor dem Aufbringen der Lackschicht (3) einen Schritt des Aufbringens, insbesondere durch Versilbern, der reflektierenden Schicht (5).

3. Verfahren nach einem der vorstehenden Ansprüche, wobei die Lackschicht (3) mindestens ein Harz und mindestens einen mineralischen Füllstoff, von denen mindestens eins ein Pigment ist, umfasst, wobei mindestens ein Harz der Lackschicht aus Acrylharzen, Polyurethanharzen, Epoxidharzen und Alkydharzen ausgewählt ist.

4. Verfahren nach einem der vorstehenden Ansprüche, wobei die Lackschicht (3) durch Aufbringen einer flüssigen Lackzusammensetzung auf Wasserbasis oder ohne Lösungsmittel erhalten wird.

5. Verfahren nach dem vorstehenden Anspruch, wobei der flüssige Lack auf einer wässrigen Dispersion eines mit Melamin vernetzten Epoxidharzes basiert.

6. Verfahren nach einem der vorstehenden Ansprüche, wobei die Lackschicht (3) eine Dicke in einem Bereich von 20 bis 100 µm, insbesondere von 30 bis 80 µm, besitzt.

7. Verfahren nach einem der vorstehenden Ansprüche, wobei die Temperatur der Oberfläche der Glasscheibe (2) unmittelbar vor dem Aufbringen der Harzschicht (4) mindestens 60 °C beträgt.

8. Verfahren nach dem vorstehenden Anspruch, wobei die Temperatur der Oberfläche der Glasscheibe (2) unmittelbar vor dem Aufbringen der Harzschicht (4) mindestens 70 °C, insbesondere mindestens 80 °C und höchstens 110 °C, beträgt.

9. Verfahren nach einem der vorstehenden Ansprüche, wobei die erste Wärmebehandlung mindestens eine Trocknung des Lacks (3) bewirkt.

10. Verfahren nach dem vorstehenden Anspruch, wobei die erste Wärmebehandlung ferner mindestens einen Beginn einer Vernetzung der Lackschicht (3) bewirkt.

11. Verfahren nach einem der Ansprüche 9 oder 10, wobei die Temperatur, der das Glas bei der ersten Wärmebehandlung ausgesetzt ist, mindestens 100 °C beträgt und die Dauer, während der diese Temperatur erreicht oder überschritten wird, mindestens 30 Sekunden, insbesondere mindestens 1 Minute, beträgt.

12. Verfahren nach einem der vorstehenden Ansprüche, wobei die Harzschicht (4) aus Harz besteht.

13. Verfahren nach einem der vorstehenden Ansprüche, wobei die Harzschicht (4) durch Abscheiden einer wässrigen Polyurethandispersion erhalten wird.

14. Verfahren nach einem der vorstehenden Ansprüche, wobei die Dicke der Harzschicht (4) zwischen 20 und 60 µm, insbesondere zwischen 25 und 40 µm, beträgt.

15. Verfahren nach einem der vorstehenden Ansprüche, wobei die Temperatur, der das Glas bei der zweiten Wärmebehandlung unterzogen wird, mindestens 180 °C beträgt.

## Claims

1. A method for obtaining decorative glass (1, 10) comprising a glass sheet (2) coated with a layer of paint (3) and with a layer of resin (4), wherein the glass sheet (2) passes successively through a first curtain-coating unit (100), wherein the layer of paint (3) is deposited on the glass sheet (2), followed by a first heat-treatment unit (110), wherein the glass sheet (2) coated with the layer of paint (3) is subjected to a first heat treatment, and subsequently through a second curtain-coating unit (120), wherein the layer of resin (4) is deposited on the layer of paint (3), followed by a second heat-treatment unit (130), wherein the glass sheet (2), coated with the layer of paint (3) and with the layer of resin (4), is subjected to a second heat treatment, the first heat treatment being such that the temperature of the surface of the glass sheet (2) immediately before the deposition of the layer of resin (4) is within a range from 50°C to 120°C.

2. The method according to claim 1, wherein the decorative glass (10) is a mirror, the glass sheet (2) being coated with a reflective layer of silver (5) arranged under the layer of paint (3), the method comprising before the deposition of the layer of paint (3), a step of depositing, particularly by silvering, said reflective layer (5).

3. The method according to one of the preceding claims, wherein the layer of paint (3) comprises at least one resin and at least one mineral filler, including at least one pigment, at least one resin of the layer of paint being selected from acrylic resins, polyurethane resins, epoxide resins and alkyd resins.

4. The method according to one of the preceding claims, such that the layer of paint (3) is obtained by depositing a water-based or solvent-free liquid paint composition.

5. The method according to the preceding claim, wherein the liquid paint is based on an aqueous dispersion of an epoxide resin crosslinked with melamine.

6. The method according to one of the preceding claims, wherein the layer of paint (3) has a thickness within a range from 20 µm to 100 µm, in particular from 30 µm to 80 µm.

7. The method according to one of the preceding claims, wherein the temperature of the surface of the glass sheet (2) immediately before the deposition of the layer of resin (4) is at least 60°C.

8. The method according to the preceding claim, wherein the temperature of the surface of the glass sheet (2) immediately before depositing the layer of resin (4) is at least 70°C, particularly at least 80°C, and at most 110°C.

9. The method according to one of the preceding claims, wherein the first heat treatment causes at least drying of the paint (3).

10. The method according to the preceding claim, wherein the first heat treatment also causes at least the beginning of crosslinking of the layer of paint (3).

11. The method according to one of claims 9 or 10, wherein the temperature to which the glass is exposed during the first heat treatment is at least 100°C, and the time during which this temperature is reached or exceeded is at least 30 seconds, particularly at least 1 minute.

12. The method according to one of the preceding claims, wherein the layer of resin (4) consists of resin.

13. The method according to one of the preceding claims, wherein the layer of resin (4) is obtained by depositing an aqueous dispersion of polyurethane.

14. The method according to one of the preceding claims, such that the thickness of the layer of resin (4) is comprised between 20 µm and 60 µm, particularly between 25 µm and 40 µm.

15. The method according to one of the preceding claims, wherein the temperature to which the glass is exposed during the second heat treatment is at least 180°C.
